# EUROPEAN PATENT SPECIFICATION

(11) **EP 3 543 584 B1**
(45) Date of publication and mention of the grant of the patent: **21.04.2021**
(21) Application number: 18382184.2
(22) Date of filing: 20.03.2018
(51) Int. Cl.: F16L 55/18, F16L 55/26

(54) **A DEVICE FOR CURING PIPELINE INNER RESIN LININGS**
VORRICHTUNG ZUR HÄRTUNG DER INNEREN HARZAUSKLEIDUNGEN EINER ROHRLEITUNG
DISPOSITIF POUR DURCIR LES GARNITURES INTÉRIEURES EN RÉSINE D'UN PIPELINE

(43) Date of publication of application: 25.09.2019
(73) Proprietor: Sewertronics, S.L., 28223 Pozuelo de Alarcon (Madrid) (ES)
(72) Inventor: KUZNIAR, Piotr, 37-100 Lancut (PL)
(74) Representative: Durán-Corretjer, S.L.P.

(56) References cited:
- EP-A1- 3 321 554
- EP-A1- 3 336 404
- EP-B1- 2 129 956
- JP-A- 2008 175 381

## Description

The subject of the invention is a device for curing inner resin linings of pipelines renovated with the use of lining sleeves containing a curable resin.

Worn-out and leaking pipelines, including those of sanitary sewerage systems, deteriorated usually because of insufficient maintenance, are subject to renovation by means of lining tubes impregnated with resins dragged into the pipeline and then bonded to inner surfaces of such pipelines in order to eliminate the existing leakage and soaking of the carried liquids through the pipeline walls posing destructive impact to natural environment.

From Polish patent description No. PL 202527 known is a method of and a set of devices for renovation of pipelines, where the renovation method according to that invention is characterised in that a lining is placed inside the pipeline and then pressed against the inner surface of the pipeline by means of rings, while ends of the lining are sealed with the use of any known methods by means of cuffs. The lining is introduced in parts which are then joined with the use of any known method by welding or gluing. The lining in the form of a plastic sleeve is joined by means of double-run thermal welding, whereas the welds are being made at definite distances from each other. Pressing of the lining against inner surface of the pipeline with the use of rings is achieved by expanding the rings which are expanded with the use of a cylinder, and when the rings are expanded, their position is fixed and they are joined permanently with the lining.

Further, the set for renovation of pipelines by means of from-inside method according to the above-quoted invention is characterised in that the set comprises a lining and a set of expandable rings distributed axially along the pipe axis and permanently joined with the lining which has the form of plastic film or the form of plates joined by means of any of known methods, whereas the ring comprises an expanding element.

Pipeline renovation technologies based on lining the pipes with a resin-impregnated tube are described in numerous patents and patent applications, with the so-called inversion technique being described in some of them. Other patent descriptions, e.g. WO2004/104469, reveal a method consisting in dragging a resin lining into pipeline, whereas hardening or curing of the resin, especially thermosetting one, consists mainly in the use of hot water or hot steam.

Further, patent description WO93/15131 reveals a pipeline renovation method in which ultrasonic radiation is used to cure resin lining. To this end, a movable device is used equipped with ultrasonic transducers, introduced into and translated along the pipeline as well as the catalytic component of the resin contained in micro-capsules which are torn apart by energy of the ultrasonic field. The resin tube constituting the lining is placed in pipeline and then cured by means of ultrasonic energy in order to release the curing catalyst.

A newer method of curing tubular resin lining on inner surface of pipeline consists in the lining being irradiated with UV waves, with an vacuum electron lamp being used for this purpose as a source of radiation introduced into the pipeline and said radiation resulting in the resin lining being cured by means of the device emitting such ultraviolet radiation.

However, it turned out that despite a number of good points characterising this method of curing resin pipeline linings, including minimisation of energy consumption compared with conventional method of curing resin linings by means of hot water of steam, the device has a serious flaw consisting in that UV radiation emitted from the device is very harmful to health and threatens lives of workers operating the devices.

From patent description WO2005/103121 known is a photosetting composition of resins which is cured by means of irradiation with visible light, especially light with wavelength of about 450 nm, i.e. blue light, whereas the relevant patent application refers to different techniques encompassing the prior art available at that time, describing also the favourable features of photosetting.

Further, from patent description of European patent No. EP 2129956 B1 known are two design versions of the device for curing pipeline inner linings based on the use of light emitting diodes (LEDs) which, contrary to UV-radiation emitting devices based on application of vacuum tubes, are characterised with high stability and substantially constant efficiency of energy or power emission level throughout the LED service life, whereas to increase effectiveness of these devices, they are equipped with an integrated fluid-based cooling systems. The device according to the first version of embodiment of this invention has a central eight-section (octahedral) segment of the device's housing provided on both ends with annular spacers, attached by means of fasteners, whereas the spacers with outer diameter adjusted to the inner diameter of pipeline lining have flange-shaped protrusions indentation outside with holes for said fasteners, and within the vicinity of at least one of the spacers mounted is a fan forcing the flow of compressed air via inner axial hole in said segment of the device's housing. The fan cools LEDs contributing to dissipation of heat onto inner finned radiators situated opposite the LEDs. Further, the rear sleeve-shaped spacer situated on the fan side is equipped with a Cardan joint allowing to couple the above-described single devices with a second analogous device. Moreover, each of the eight sections of the housing segment is equipped with a printed circuit board PCB on which twelve diodes LED were mounted, so that the housing segment has a total of 96 diodes LED, of which 95 are light-emitting diodes (LEDs) and one is a temperature or infrared detecting diode used to monitor temperature of inner surface of the cured pipeline lining, and further, the PCB holds a temperature sensor to prevent increase of LED temperature above an admissible maximum level, said sensor being connected in series with light-emitting diodes and used to deactivate them in case of detecting temperature values exceeding those pre-assumed to be the maximum admissible ones. Furthermore, the front portion of each profiled section of the device's housing segment has a cavity in which a transparent shield is placed to provide mechanical protection for LEDs placed under the cover, whereas opposite this protective shield, the above-mentioned printed circuit board PCB is placed with its front face oriented opposite the LEDs, coupled by means of thermal conductivity with a finned metallic element radiating the heat out and channelling the heat generated by the light emitting inside the housing segment provided with a straight-through duct in which compressed air is supplied under pressure through said housing segment to cool the finned metallic elements and thus cooling LEDs emitting electromagnetic radiation. Each of the eight profiled sections of the device's housing segment is positioned in a way allowing to connect it to the neighbouring analogous profiled housing section and thus obtain the octahedral segment of the housing, whereas side surfaces of each section, which are to be connected to side surfaces of neighbouring sections of the housing, are provided with semicircular hollows, allowing to interconnect the eight profiled sections of the housing with each other by means of straight-through pins inserted in them.

In another version of embodiment of the device according to the above-quoted invention, the device comprises two housing segments, both having the shape of a circular cylinder, each of the segments of the housing being assembled out of six arched sections and equipped with twelve LEDs and six front elements with the profile of a ring segment, and the segments being connected with each other by means of spacers and securing pins so that the two housing segments connected with each other have a total of twelve sections containing a total one hundred and forty four LEDs.

An objective of the present invention is an energy-saving and low-noise design of a device for renovation of pipelines with the use of lining sleeves soaked with resin curable with electromagnetic radiation generated by light-emitting diodes (LEDs) which would be a structure free from the fault typical for devices of that type in which the diodes are cooled with the use of compressed air supplied to front head of the device equipped with said LEDs by a noisy high-power compressor or a fan, making thus the new design more silent and suitable for use especially in the night-time. A further objective of the invention is to provide such design of a pipeline renovation device in which the front working head equipped with LEDs would be supplied with electric current under voltage of 30 V, guaranteeing thus electrical safety of users of the device and where said diodes will be cooled with the use of radiators surrounded with a liquid coolant which would improve significantly the cooling efficiency of the device compared to known solutions of that type. Moreover, the device according to the invention should offer the possibility of being easily adapted by current users of similar devices used for heating and curing resins by means of hot water warmed up with the use of a hearing furnace by replacing the thermal curing process with the process of curing resin by means of electromagnetic radiation generated by LEDs.

A device according to the invention is defined in claim 1.

The device comprises a monolithic metallic body having an inner sleeve-shaped portion with evenly, circumferentially distributed flat facets, said inner sleeve-shaped portion being provided, on its rear end, with two-step indentation evolving further into a rear profiled portion in the form of a spherical cap segment. Preferably, the front end of the sleeve-shaped portion being connected detachably to a cover which is preferably equipped with a camera and a front lighting.

The rear portion of the body of the device is preferably joined detachably with a cable stuffing box and an elastic hose one end of which is fixed in said box; the hose carries electric conductors supplying electric current, preferably under voltage of 30 V, to LEDs mounted in the metal body, LEDs of the front lighting, and the camera mounted in the front cover of the body.

The coolant cooling the radiators is preferably water or a solution of glycol.

The device according to the invention allows to renovate pipelines with the use of resin sleeves installed in a pipe to be renovated and filled with a liquid which at the same time is used for passive cooling the device. This improved significantly the effectiveness of cooling the device equipped with high-power LEDs and additionally allowed to use several heads one after another without deterioration of the effectiveness of cooling contrary to air-based cooling systems where the air stream, after having cooled one head, reached another one already heated up and thus producing much less cooling effect with cooling of successive heads being virtually impossible. The solution according to the present invention allows to use heads generating power levels currently unobtainable on the market and further, allows to cure resins at rates exceeding significantly those offered in currently offered solutions. Moreover, application of liquid-based system for cooling LEDs and supplying them from a battery or a small well-silenced electric power generating set allowed to obtain a noiseless device possible to be operated also at night-time.

The subject of the invention is shown in three examples of its embodiment on drawings denoted as Fig. 1-Fig. 22, of which Fig. 1 shows a first variant of the device for curing pipeline inner resin linings provided with two radiators, in the front view; Fig. 2 - the same device in the side view, Fig. 3 - the same device in axial section along line A-A; Fig. 4 - the same device disassembled into individual components, in the front view; Fig. 5 - the same device disassembled into individual components, in a perspective view; Fig. 6 - the same device in vertical section along line B-B; Fig. 7 - the same device in vertical section along line C-C; Fig. 8 - the same device in vertical section along line D-D; Fig. 9 - a second variant of the device for curing pipeline inner resin linings, having only one radiator provided in rear indentation of the device body, in the front view; Fig. 10 - the same device as viewed from the camera side; Fig. 11 - the same device as viewed from the radiator side; Fig. 12 - the same device in vertical section along line E-E; Fig. 13 - the same device in vertical section along line F-F; Fig. 14 - the same device in vertical section along line G-G; Fig. 15 - a third variant of the device for curing pipeline inner resin linings, having one radiator provided in the front cover of the device, in the front view; Fig. 16 - the same device as viewed from its front cover side; Fig. 17 - the same device as viewed from the side of rear indentation of its body; Fig. 18 - the same device in axial section along line H-H; Fig. 19 - the same device in vertical section along line K-K; Fig. 20 - the same device in vertical cross-section along line L-L; Fig. 21 - enlarged detail "S" of front faces of the three variants of the device, in axial section; and Fig. 22 - a fragment of renovated pipeline with the lining sleeve soaked with an electromagnetic radiation-cured resin introduced inside the pipe, filled with a liquid and with the device for curing the resin lining placed inside the sleeve, with two radiators of the device being cooled with the liquid.

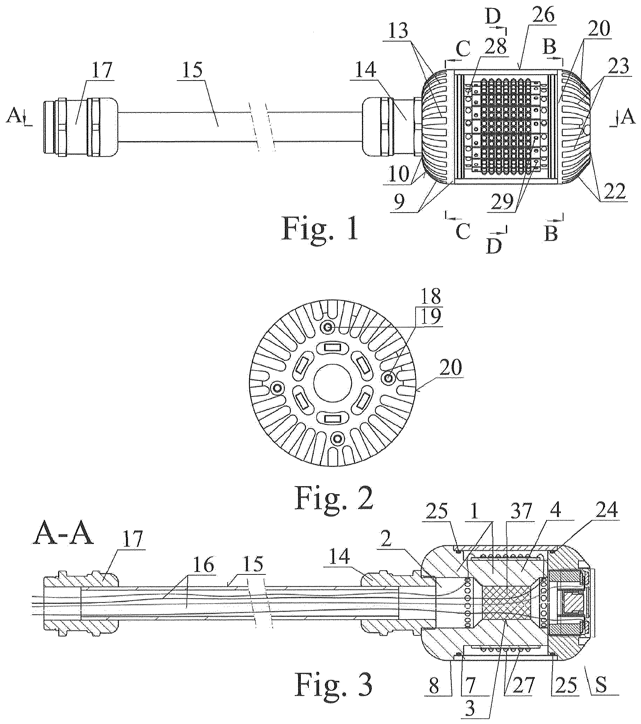

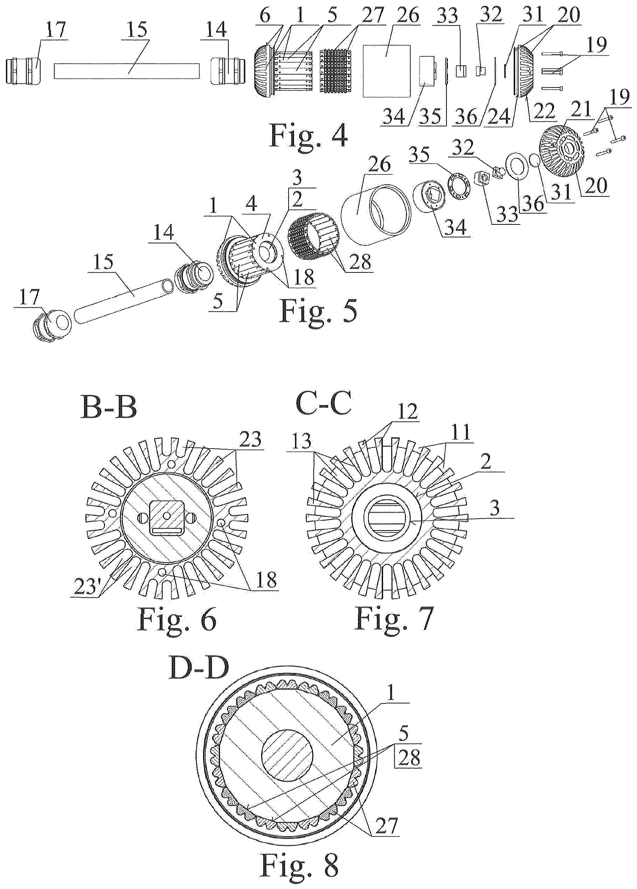

The device for curing pipeline inner resin linings according to the first variant of its embodiment shown in drawings of Figs. 1-8 comprises a profiled monolithic metallic body 1 made of copper, having a two-step through axial hole 2 and 3 constituting the inner sleeve-shaped portion 4 of the body, outer surface of said portion having twenty identical flat facets 5 distributed evenly along circumference of a circle and constituting chords of circle, whereas the end of said inner portion of the body has a two-step indentation 6 formed by a lower annular indentation 7 and an upper annular indentation 8, evolving further into a rear profiled portion 9 of the body with the profile of a spherical cap segment 10, outer arched surface of which is provided with radially oriented grooves 11 with a profile close to U-shaped one, separated from each other by ribs 12 constituting together a rear radiator 13 of the body; into the threaded larger-diameter hole 2 of the body screwed is a cable stuffing box 14 in which fixed is one end of elastic hose 15 carrying electric conductors 16 supplying electric current, preferably under voltage of 30 V, for LEDs of the device, while the other end of the elastic hose is fixed in an analogous second cable stuffing box 17. Further, to the front face of the sleeve-shaped portion 4 of the body 1, provided with four blind threaded holes 18, a profiled front cover 20 is fixed by means of screws 19 going through holes 21, with the outer profile of the cover similar to this of the rear portion 9 of the body 1. The cover, on its front face, has also the profile of a spherical cap segment 22 outer surface of which constitutes a radiator 23 with radial grooves 23' having a profile close to U-shaped one; the inner flat end of the segment is provided with an annular recess 24 which, together with a lower annular indentation 7 of rear radiator 13, is sealed with the use of ring gaskets 25 and holds a sleeve 26 made of a transparent material shielding LEDs 27 mounted in strip-shaped aluminium thermally conducting plates 28, screwed by means of screws 29 to flat facets 5 of the sleeve-shaped portion 4 of the body 1. Each of the strip-shaped plates 28 is equipped with fourteen LEDs 27 situated in two rows opposite each other, seven LEDs in each of the rows, so that on circumference of the sleeve-shaped portion 4 of the body 1 there is a total of 280 LEDs 27.

Besides, the front flat surface of cover 20 of the body 1 is provided, under its radiator 23, with a two-step orifice 30 and a profiled seat which holds: a camera glass 31 and further, a camera 32 situated in a camera basket 33 and surrounded with the camera body 34; around the camera, there is a front lighting 35 with LEDs as well as a lighting glass 36 situated behind said lighting. Both LEDs 27 of the body 1 generating electromagnetic radiation and LEDs of the front lighting 35 are connected to an external source of electric current with voltage 30 V by means of electric conductors 16 situated in an elastic hose 15, whereas an axial hole 3 of the body 1 is packed with a sealing compound 37 preventing the liquid cooling radiators 13 and 23 (for instance water) from penetrating inside the body of the device.

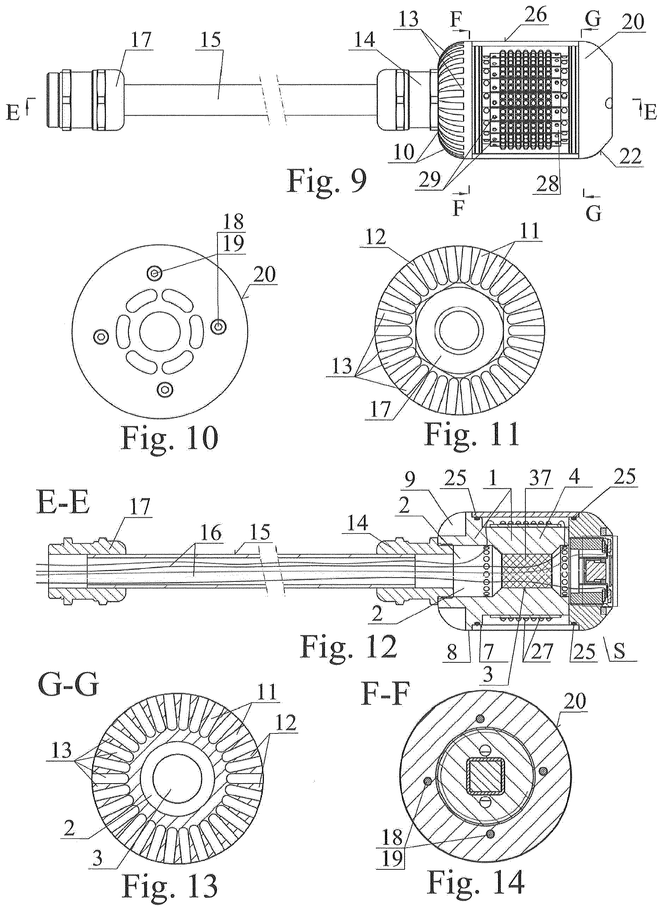

The device for curing pipeline inner resin linings according to the second variant of its embodiment shown on drawings of Figs. 9-14 has a structure similar to this of the device according to the first variant of its embodiment shown in drawings of Figs. 1-8, with the difference between the two devices consisting only in that the device according to the second variant has only one rear radiator 13 analogous to this present in the device according to its first variant, whereas the front profiled cover 20 of the body 1 of the device has a plain face with the profile of a spherical cap segment 22, and moreover, the sleeve 26 shielding LEDs 27 of the body 1 is made of quartz glass.

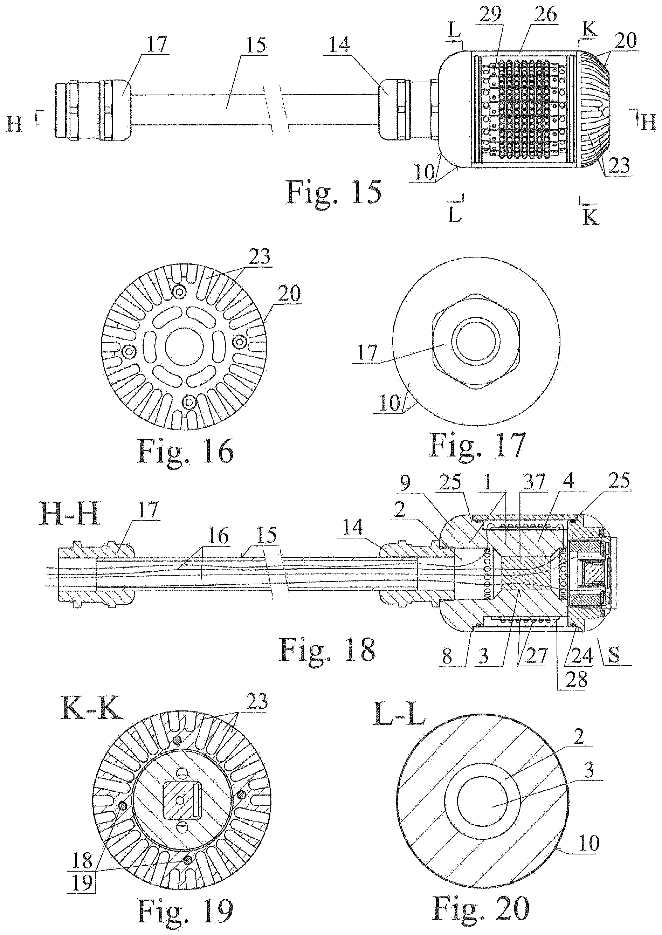

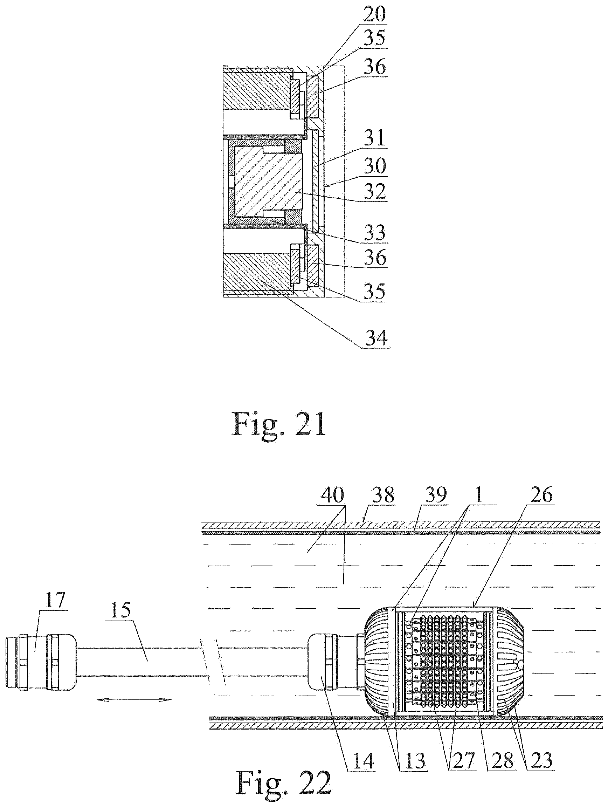

Further, the device for curing pipeline inner resin linings according to the third variant of its embodiment shown on drawings of Figs. 15-21 has also a structure similar to this of the device according to the first variant of its embodiment shown in drawings of Figs 1-8, with the difference between the two devices consisting only in that the device according to the third variant has only one front radiator 23 with grooves (23') which is formed in cover 20 of the body 1 of the device, whereas the rear profiled portion 9 of the body 1 with the profile of a spherical cap segment 10 has a plain surface.

The principle of operation of each of the three above-described variants of the device according to the invention consists in that first, an elastic lining sleeve 39 soaked with a resin curable with electromagnetic radiation is placed in the pipeline 38; then, the sleeve is filled with a liquid 40 transparent to UV radiation the purpose of which is to cool radiators 13 or 23 or 13 and 23 by flowing through grooves 11 and/or 23' provided in them, whereas static pressure of the liquid presses the sleeve against the inner walls of the pipeline to be renovated; and then, the device is introduced to the pipeline. Next, electric conductors 16, connected via the cable stuffing box 17 to LEDs 27 of the body 1 and its front cover 20, as well as to the camera 34 and front lighting 35, are connected to an external 30 V electric power supply (not shown in the figures), and finally, the whole device is pushed, by any known method and with the use of elastic hose 15, into and along the renovated pipeline 38, where operation of electromagnetic radiation generated by LEDs 27 with wavelengths, depending on diameter of the renovated pipeline, from the range 200-900 nm and with proper power, results in adequate curing of the pipeline resin together with a layer of resin-based lining sleeve fixed to inner surface of the pipeline.

In the second embodiment, elastic sleeve 39 soaked with a resin and placed in the renovated pipeline 38 was filled with a solution of glycol serving as a coolant cooling radiators 13 or 23 or radiators 13 and 23 of the device, whereas the front cover 20 had the form of a profiled ring fixed on the front end of outer surface of the sleeve-shaped portion 4 of the body 1.

## Claims

1. A device for curing pipeline inner resin linings (38) with the use of an elastic lining sleeve (39) soaked with a resin curable with electromagnetic radiation, said device comprising a metallic body (1) which is equipped with thermally conducting plates (28) in which LEDs (27) are mounted generating electromagnetic radiation with wavelengths within the range 200-900 nm to cure the resin means of the sleeve on an inner surface of the pipeline, said device being equipped with at least one radiator (13,23) carrying away heat **characterised in that** the outer surface of the at least one radiator is provided with grooves for carrying away the heat directly to a coolant (40) transparent to UV radiation surrounding the at least one radiator, the metallic body (1) is a monolithic (1) having an inner sleeve-shaped portion (4) with evenly, circumferentially distributed flat facets (5) and provided, on its rear end, with a two-step indentation (6) evolving further a rear profiled portion (9) in the form of a spherical cap segment (10).

2. The device according to claim 1 **characterised in that** it has two radiators (13, 23).

3. The device according to claims 1 or 2 **characterised in that** a first radiator (13) is formed in the rear profiled portion (9) of the two-step indentation (6) of the monolithic metallic body (1), whereas a second radiator (23) is formed in a profiled front portion of a front cover (20).

4. The device according to claim 3 **characterised in that** a front end of the sleeve-shaped portion (4) of the monolithic metallic body (1) is joined detachably with the front cover (20).

5. The device according to anyone of claims 3 or 4 **characterised in that** the front cover (20) is equipped with a camera (34) and a lighting (35).

6. The device according to anyone of claims 1 to 5 **characterised in that** the rear profiled portion (9) is joined detachably with a cable stuffing box (14) in which one end of an elastic hose (15) is fixed, said elastic hose carrying electric conductors (16) supplying electric current preferably under a voltage of 30 V, to the LEDs (27) mounted in the monolithic metallic body (1), to LEDs of the front lighting (35), and to the camera (32) fixed in the front cover (20).

## Patentansprüche

1. Vorrichtung zum Aushärten von Rohrleitung-Innenharzauskleidungen (38) unter Verwendung einer elastischen Auskleidungshülse (39), die mit einem Harz getränkt ist, das mit elektromagnetischer Strahlung aushärtbar ist, wobei die Vorrichtung einen Metallkörper (1) umfasst, der mit wärmeleitenden Platten (28) ausgestattet ist, in denen LEDs (27) angebracht sind, die elektromagnetische Strahlung mit Wellenlängen im Bereich von 200-900 nm erzeugen, um das Harzmittel der Hülse an einer Innenfläche der Rohrleitung auszuhärten, wobei die Vorrichtung mit zumindest einem Kühler (13, 23) ausgestattet ist, der Wärme abführt, **dadurch gekennzeichnet, dass** die äußere Oberfläche des zumindest einen Kühlers mit Rillen zum Abführen der Wärme direkt zu einem Kühlmittel (40) versehen ist, das für UV-Strahlung transparent ist, die den zumindest einen Kühler umgibt, wobei der metallische Körper (1) ein monolithischer Körper (1) ist, der einen inneren hülsenförmigen Teil (4) mit gleichmäßig in Umfangsrichtung verteilten flachen Facetten (5) aufweist und an seinem hinteren Ende mit einer zweistufigen Vertiefung (6) versehen ist, die sich weiter in einen hinteren profilierten Teil (9) in Form eines kugelförmigen Kappensegments (10) entwickelt.

2. Vorrichtung nach Anspruch 1, **dadurch gekennzeichnet, dass** sie zwei Kühler (13, 23) aufweist.

3. Vorrichtung nach einem der Ansprüche 1 oder 2, **dadurch gekennzeichnet, dass** ein erster Kühler (13) im hinteren profilierten Teil (9) der zweistufigen Vertiefung (6) des monolithischen Metallkörpers (1) ausgebildet ist, während ein zweiter Kühler (23) in einem profilierten vorderen Teil einer vorderen Abdeckung (20) ausgebildet ist.

4. Vorrichtung nach Anspruch 3, **dadurch gekennzeichnet, dass** ein vorderes Ende des hülsenförmigen Teils (4) des monolithischen Metallkörpers (1) lösbar mit der vorderen Abdeckung (20) verbunden ist.

5. Vorrichtung nach einem der Ansprüche 3 oder 4, **dadurch gekennzeichnet, dass** die Frontabdeckung (20) mit einer Kamera (34) und einer Beleuchtung (35) ausgestattet ist.

6. Vorrichtung nach einem der Ansprüche 1 bis 5, **dadurch gekennzeichnet, dass** der hintere profilierte Teil (9) lösbar mit einem Kabelstaukasten (14) verbunden ist, in dem ein Ende eines elastischen Schlauchs (15) befestigt ist, wobei der elastische Schlauch elektrische Leiter (16) trägt, die elektrischen Strom, vorzugsweise unter einer Spannung von 30 V, zu den in dem monolithischen Metallkörper (1) angebrachten LEDs (27), zu LEDs der vorderen Beleuchtung (35) und zu der in der vorderen Abdeckung (20) befestigten Kamera (32) liefern.

## Revendications

1. Dispositif pour durcir les garnitures intérieures (38) en résine d'un pipeline avec l'utilisation d'un manchon élastique de doublure (39) imbibé d'une résine durcissable par une radiation électromagnétique, ledit dispositif comprenant un corps métallique (1) qui est équipé avec des plaques thermiquement conductrices (28) dans lesquelles sont montées des LEDs (27) générant une radiation électromagnétique avec des longueurs d'onde dans la plage de 200 à 900 nm pour durcir les éléments en résine du manchon sur une surface intérieure du pipeline, ledit dispositif étant équipé avec au moins un radiateur (13, 23) évacuant la chaleur,
**caractérisé en ce que** la surface extérieure dudit au moins un radiateur est munie de rainures pour évacuer la chaleur directement vers un liquide de refroidissement (40) transparent à la radiation UV qui entoure ledit au moins un radiateur, le corps métallique (1) est un corps monolithique (1) ayant une portion intérieure en forme de manchon (4) avec des facettes plates (5) régulièrement distribuées selon la circonférence et muni, sur son extrémité postérieure, d'une indentation (6) à deux étages se développant en outre dans une portion postérieure profilée (9) sous la forme d'un segment de bouchon sphérique (10).

2. Dispositif selon la revendication 1, **caractérisé en ce qu'**il comprend deux radiateurs (13, 23).

3. Dispositif selon l'une des revendications 1 ou 2 **caractérisé en ce qu'**un premier radiateur (13) est formé dans la portion postérieure profilée (9) de l'indentation (6) à deux étages du corps métallique monolithique (1), tandis qu'un second radiateur (23) est formé dans une portion frontale profilée d'un couvercle frontal (20).

4. Dispositif selon la revendication 3 **caractérisé en ce qu'**une extrémité frontale de la portion en forme de manchon (4) du corps métallique monolithique (1) est reliée de façon détachable au couvercle frontal (20).

5. Dispositif selon l'une quelconque des revendications 3 ou 4 **caractérisé en ce que** le couvercle frontal (20) est équipé d'une caméra (34) et d'un éclairage (35).

6. Dispositif selon l'une quelconque des revendications 1 à 5 **caractérisé en ce que** la portion postérieure profilée (9) est reliée de façon détachable à un presse étoupe pour câble (14) dans lequel est fixée une extrémité d'un tube élastique (15), ledit tube élastique portant des conducteurs électriques (16) fournissant un courant électrique de préférence sous une tension de 30 V aux LEDs (27) montées dans le corps métallique monolithique (1), aux LEDs de l'éclairage frontal (35), et à la caméra (32) fixée dans le couvercle frontal (20).
